**Europäisches Patentamt**

**European Patent Office**

**Office européen des brevets**

(19)

(11) Veröffentlichungsnummer: **0 312 714 B1**

# (12) EUROPÄISCHE PATENTSCHRIFT

(45) Veröffentlichungstag der Patentschrift:
04.09.91 Patentblatt 91/36

(51) Int. Cl.⁵: **G01M 3/00, F27B 3/28**

(21) Anmeldenummer: **88112217.0**

(22) Anmeldetag: **28.07.88**

(54) **Verfahren zur Überwachung metallurgischer Gefässe.**

(30) Priorität: **09.10.87 DE 3734182**

(43) Veröffentlichungstag der Anmeldung:
**26.04.89 Patentblatt 89/17**

(45) Bekanntmachung des Hinweises auf die
Patenterteilung:
**04.09.91 Patentblatt 91/36**

(84) Benannte Vertragsstaaten:
**AT BE CH DE ES FR GB GR IT LI LU NL SE**

(56) Entgegenhaltungen:
**EP-A- 0 073 322**
**US-A- 3 644 172**
**PATENT ABSTRACTS OF JAPAN Band 8, Nr.
257 (P-316)(1694); & JP-A-59126928**
**PATENT ABSTRACTS OF JAPAN Band 5, Nr.
13(P-46)(685); JP-A-55142230**

(56) Entgegenhaltungen:
**PATENT ABSTRACTS OF JAPAN Band 7, Nr.
127 (P-201)(1272), 3. Juni 1983; & JP-A-5845536**
**PATENT ABSTRACTS OF JAPAN Band 3, Nr.
83 (C-52); & JP-A-5458695**
**PATENT ABSTRACTS OF JAPAN Band 10, Nr
165 (P-467)(2221), 12. Juni 1986; & JP-
A-61017928**

(73) Patentinhaber: **Thyssen Stahl
Aktiengesellschaft
Kaiser-Wilhelm-Strasse 100
W-4100 Duisburg 11 (DE)**

(72) Erfinder: **Strunck, Fritz-Jürgen, Dipl.-Ing.
Am Birkenhain 7
W-4223 Voerde 2 (DE)**
Erfinder: **Becker, Johannes
Am Grafenbusch 55
W-4200 Oberhausen 11 (DE)**

(74) Vertreter: **Cohausz & Florack Patentanwälte
Postfach 14 01 61 Schumannstrasse 97
W-4000 Düsseldorf 1 (DE)**

EP 0 312 714 B1

## Beschreibung

Die Erfindung bezieht sich auf ein Verfahren zum Erkennen von Leckagen an mit feuerfestem Material zugestellten und mit Kühlelementen ausgerüsteten metallurgischen Gefäßen, bei denen die bei einer Leckage aus den Kühlelementen austretende und in das feuerfeste Material eindringende Kühlflüssigkeit verdampft.

Es ist bekannt, metallurgische Gefäße mit feuerfesten Steinen und/bzw. Massen auszukleiden. Dabei werden in den Bereichen der Gefäße, die besonders stark mit Wärme beaufschlagt werden (beispielsweise durch heiße Abgase oder wie im Falle eines Elektrolichtbogenofens durch die Strahlung des Lichtbogens), die feuerfeste Auskleidung üblicherweise durch ein Leitungssystem bzw. Kühlelemente ersetzt, das bzw. die von einer Kühlflüssigkeit durchströmt werden. Dieser in Einzelkreise unterteilte Gesamt-Kühlkreislauf des metallurgischen Gefäßes kann ein Kalt-Warm- oder Heiß-Kühlsystem mit Wasser als Kühlflüssigkeit sein. Da jedoch nicht immer, beispielsweise bei einem Elektrolichtbogenofen aufgrund des flüssigen Metallbades, auf die feuerfeste Auskleidung ganz verzichtet werden kann, besteht die Auskleidung vieler metallurgischer Gefäße aus einer Kombination von feuerfest zugestellten Teilen und einzelnen von einer Kühlflüssigkeit durchströmten Kühlelementen, die zu einem aus Einzelkreisen bestehenden Gesamt-Kühlkreislauf zusammengeschaltet sind.

Bei Leckagen an den von der Kühlflüssigkeit durchströmten Gefäßteilen, beispielsweise an den wassergekühlten Panels eines Elektrolichtbogenofens, dringt die Kühlflüssigkeit bzw. das Wasser in die unter den Kühlelementen liegende feuerfeste Auskleidung ein und zerstört diese durch Hydratisierung. Sofern diese Leckagen nicht rechtzeitig erkannt werden, kann es infolge der Zersetzung der feuerfesten Auskleidung zu einer Zerstörung der Gefäßwand und damit beispielsweise zu einem Austritt des flüssigen Metalls aus dem Schmelzgefäß kommen. Dies führt in der Regel zu kostspieligen Folgeschäden an dem metallurgischen Gefäß.

Größere Leckagen an den gekühlten Gefäßteilen bzw. Kühlelementen können durch Messung und Überwachung der Durchflüsse festgestellt werden. Dazu werden der Gesamt-Kühlkreislauf zweckmäßigerweise in Einzelkreisläufe unterteilt und gegebenenfalls auftretende Leckagen mittels Durchflußmessungen in diesen Einzelkreisläufen registriert. Die untere Grenze der Leckerkennung liegt bei der Durchflußmessung bei den zur Zeit verfügbaren Geräten bei ca. 250 cm³/sec. Größere Leckagen an den Kühlelementen können damit meßtechnisch erkannt und dem Bedienungspersonal gemeldet werden. Über die Messung hinaus ist es notwendig, jeden einzelnen Kreis mit den erforderlichen Schnellschlußeinrichtungen auszurüsten, um im Schadensfalle einzelne Kühlbereiche sowohl im Vor- als auch im Rücklauf abschalten zu können, um ein weiteres Nachlaufen der Kühlflüssigkeit zu verhindern.

Kleine Leckagen, beispielsweise in Form einiger Tropfen/min., können bisher nicht erkannt werden. Demgemäß liegt der Erfindung die Aufgabe zugrunde, ein Verfahren und eine Vorrichtung zur Durchführung des Verfahrens zu entwickeln, um auch kleine Mengen der bei einer Leckage aus den Kühlelementen austretenden Kühlflüssigkeit in der Größenordnung kleiner 250 cm³/sec. bis zum Tropfenaustritt erkennen zu können.

Erfindungsgemäß wird diese Aufgabe bei einem Verfahren der eingangs genannten Gattung dadurch gelöst, daß die verdampfte Kühlflüssigkeit durch den aufgrund der Volumenvergrößerung in dem feuerfesten Material erzeugten Überdruck in Auffangrohren gesammelt, einem Feuchteindikator außerhalb des metallurgischen Gefäßes zugeführt und registriert wird.

Eine zur Durchführung des erfindungsgemäßen Verfahrens geeignete Vorrichtung ist dadurch gekennzeichnet, daß in der Nähe, vorzugsweise unterhalb der Leitungen bzw. Kühlelemente des metallurgischen Gefäßes, ein aus perforierten Rohren als Dampfauffangrohre aufgebautes Rohrsystem installiert ist, das aus mindestens einem einseitig geschlossenen perforierten Rohr besteht, dessen anderes Ende nach außen geführt und an einen Feuchteindikator angeschlossen ist.

Auch geringe Flüssigkeitsmengen, die bei einer Leckage aus den Kühlelementen austreten und in die feuerfeste Auskleidung des metallurgischen Gefäßes eindringen, verdampfen aufgrund der hohen Temperatur der feuerfesten Steine bzw. Massen. Die Volumenvergrößerung bei der Verdampfung erzeugt einen Überdruck in der Feuerfestauskleidung, der dazu führt, daß sich der Dampf in den perforierten Auffangrohren bzw. Entnahmerohren sammelt. Der Überdruck in diesen Rohren treibt den Dampf durch eine Entlastungsbohrung, die sich am Rohrende außerhalb des metallurgischen Gefäßes befindet, an dem der Feuchteindikator angebracht ist. Dabei kondensiert der Dampf an dem Feuchteindikator und löst durch eine entsprechende Reaktion ein elektrisches Signal aus.

Nach diesem Verfahren und mit Hilfe der zur Durchführung des Verfahrens geeigneten Vorrichtung ist es möglich, auch kleine Leckagen an metallurgischen Gefäßen zu erkennen, die mit einer Wandtemperatur größer ca. 100°C arbeiten. Wesentlich ist demnach die Verdampfung der aus einer Leckage austretenden Kühlflüssigkeit. Bezüglich der Meßgenauigkeit ergab beispielsweise ein Anfeuchten der feuerfesten Auskleidung eines Elektrolichtbogenofens mit nur 1 cm³ Wasser einen einwandfreien Nachweis mit Hilfe der erfindungsgemäßen Vorrichtung.

Ein Ausführungsbeispiel der Erfindung wird an Hand der schematischen Zeichnung nachstehend erläutert.

Es zeigen :

Fig. 1    die Draufsicht auf einen Elektrolichtbogenofen und
Fig. 2    einen Teilschnitt eines Elektrolichtbogenofens.

Das Ofengefäß (1) ist innenseitig mit Feuerfestmaterial (2) ausgekleidet. Am Ofengefäßmantel sind Kühlelemente (3) angeordnet. Mit (4) ist ein sogenannter Schlackenbär angedeutet, der sich im Verlaufe des Ofenbetriebes bildet.

Unterhalb der Kühlelemente (3) ist das Dampfauffangrohr (5) eingebaut. Es handelt sich beispielsweise um ein handelsübliches dickwandiges 1/2-Zoll-Rohr, das unterseitig Löcher mit 5 mm Durchmesser erhält. Die Löcher sind in einem Abstand von z.B. 100 mm angeordnet. Die unterseitige Perforierung des Dampfauffangrohres (5) hat den Vorteil, daß die Löcher vor Verstopfen durch herabfallendes Feuerfestmaterial geschützt sind.

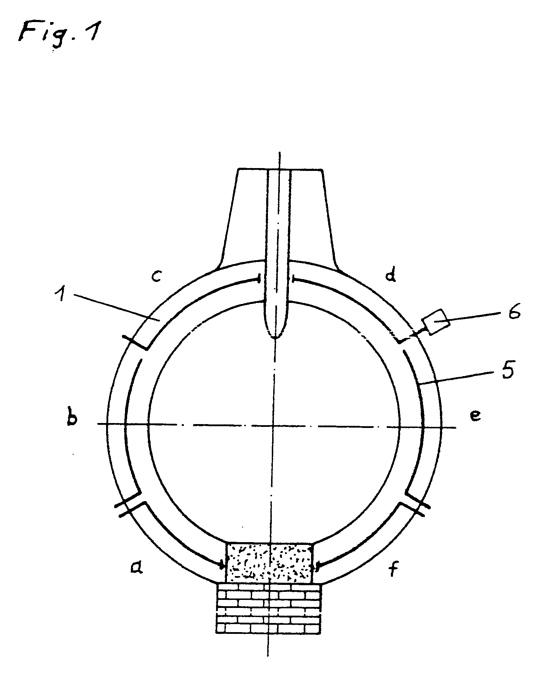

In Fig. 1 ist angedeutet, daß das Leckage-Erkennungssystem in sechs am Umfang des Ofengefäßes (1) gleichmäßig verteilte Einzelabschnitte (a-f) unterteilt ist. Jedes System arbeitet unabhängig voneinander.

Die Aufteilung des Leckage-Meßsystems in mehrere Abschnitte hat den Vorteil, daß eine evtl. Leckage schneller zu orten ist. Das Meßsystem besitzt damit auch eine höhere Ansprech-Empfindlichkeit.

Am Austritt jedes einseitig geschlossenen Dampfauffangrohres (5) befindet sich außerhalb des Ofengefäßes (1) der Feuchteindikator (6), ein handelsübliches Meßgerät, das z.B. so funktioniert, daß der Feuchteindikator auf elektrische Widerstandsänderungen reagiert. Die Widerstandsänderung ist also ein Maß für die Feuchte. Wird ein bestimmter Widerstandsgrenzwert überschritten, wird ein optisches oder akustisches Signal ausgelöst, so daß das Ofenbedienungspersonal reagieren kann. Die Meßwerte des Feuchteindikators lassen sich selbstverständlich auch auf Meßstreifen registrieren.

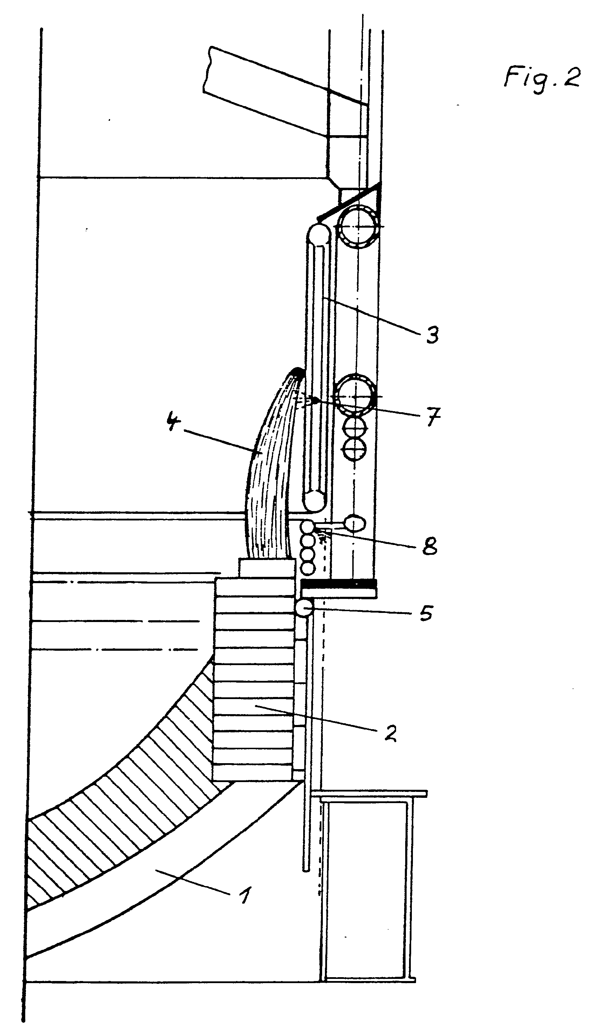

In Fig. 2 sind Leckagen im Kühlsystem (3) angedeutet. Eine Leckage (7) infolge Verschleiß ist an einem Kühlelement angedeutet und eine andere Leckage (8) befindet sich an einem undicht gewordenen Kühlmittelleitungsanschluß.

Die aus den Leckagen (7, 8) austretende Kühlflüssigkeit dringt in die feuerfeste Zustellung des metallurgischen Gefäßes ein und entwickelt bei der Verdampfung der Kühlflüssigkeit einen Überdruck, aufgrund dessen Dampf in die perforierten Dampfauffangrohre (5) eindringt und zum Feuchteindikator (6) gelangt, in welchem der Dampf kondensiert wird. Bei Überschreiten eines bestimmten Grenzwertes wird eine Reaktion, z.B. ein akustisches oder optisches Signal, ausgelöst.

Das erfindungsgemäße Leckage-Erkennungssystem läßt sich an allen metallurgischen Gefäßen, die mit feuerfestem Material zugestellt und mit Kühlelementen versehen sind, verwenden. Auch der nachträgliche Einbau in metallurgische Gefäße ist möglich.

## Patentansprüche

1. Verfahren zum Erkennen von Leckagen an mit feuerfestem Material (2) zugestellten und mit Kühlelementen (3) ausgerüsteten metallurgischen Gefäßen (1), bei denen die bei einer Leckage aus den Kühlelementen austretende und in das feuerfeste Material (2) eindringende Kühlflüssigkeit verdampft, **dadurch gekennzeichnet,** daß die verdampfte Kühlflüssigkeit durch den aufgrund der Volumenvergrößerung in dem feuerfesten Material (2) erzeugten Überdruck in Auffangrohren (5) gesammelt, einem Feuchteindikator (6) außerhalb des metallurgischen Gefäßes (7) zugeführt und registriert wird.

2. Vorrichtung zur Durchführung des Verfahrens nach Anspruch 1, **dadurch gekennzeichnet,** daß in der Nähe, vorzugsweise unterhalb der Kühlelemente (3), ein Rohrsystem installiert ist, das aus mindestens einem einseitig geschlossenen perforierten Dampfauffangrohr (5) besteht, dessen anderes Ende nach außen geführt und an einen Feuchteindikator (6) angeschlossen ist.

## Claims

1. A process for monitoring leakages in metallurgical vessels (1) lined with refractory material (2) and equipped with cooling elements (3), wherein the cooling liquid emerging from the cooling elements in case of a leakage and penetrating into the refractory material (2) evaporates, characterized in that the evaporated cooling liquid is collected in intercepting tubes (5) due to the excess pressure produced in the refractory material (2) by the increase in volume, fed to a moisture indicator (6) outside the metallurgical vessel (7) and recorded.

2. An apparatus for the performance of the process according to claim 1, characterized in that installed adjacent, preferably below the cooling elements (3), is a system of pipes comprising at least one perforate vapour intercepting pipe (5) which is closed on one side and whose other end extends outwards and is connected to a moisture indicator (6).

## Revendications

1. Procédé de reconnaissance de fuites sur des récipients métallurgiques (1) garnis de matériau réfractaire (2) et équipés d'éléments de refroidissement (3), dans lesquels le liquide de refroidissement sortant des éléments de refroidissement, dans le cas d'une fuite, et pénétrant dans le matériau réfractaire (2) se vaporise, caractérisé en ce que le liquide de refroidissement vaporisé est, rassemblé dans des tubes récepteurs (5) par la surpression créée dans le matériau réfractaire (2) du fait de l'augmentation de volume, est amené à un indicateur d'humidité (6) à l'extérieur du récipient métallurgique et enregistré.

2. Dispositif pour la mise en oeuvre du procédé selon la revendication 1, caractérisé en ce qu'un système de tubes est installé au voisinage, avantageusement au-dessous, des éléments de refroidissement, qui est constitué au moins d'un tube récepteur de vapeur (5) perforé fermé d'un côté, dont l'autre extrémité conduit à l'extérieur et est raccordée à un indicateur d'humidité (6).

Fig. 1

Fig.2